# EUROPÄISCHE PATENTANMELDUNG

(11) **EP 2 354 473 A2**
(43) Veröffentlichungstag der Anmeldung: **10.08.2011**
(21) Anmeldenummer: 11150932.9
(22) Anmeldetag: 14.01.2011
(51) Int. Cl.: F01D 25/28, F02C 7/20, F02C 7/32, F02C 7/275

(54) **Zwischengehäuse für ein Gasturbinentriebwerk**

(30) Priorität: 20.01.2010 DE 102010001059
(71) Anmelder: Rolls-Royce Deutschland Ltd & Co KG, 15827 Blankenfelde-Mahlow (DE)
(72) Erfinder: Thies, Robert, 14548, Schwielowsee (DE)

(57) **Zusammenfassung**

Ein Zwischengehäuse für ein Gasturbinentriebwerk, das einen Außenring (3), einen Innenring (1) und einen Zwischenring (2) aufweist, die durch äußere und innere, zueinander fluchtend angeordnete Stützstreben (4,5) gegeneinander abgestützt sind, und dem jeweils an einer einem Flugzeugrumpf zugewandten Seite ein Befestigungsbügel (8) zur Aufhängung des Triebwerks sowie an der Unterseite ein mit einer Radialwelle (6) verbundenes Hilfsgerätegetriebe (7) zugeordnet ist, umfasst jeweils eine die Radialwelle verkleidende innere und äußere, in einer 6.00Uhr-Position angeordnete Stützstrebe (4.1,5.1) sowie am Umfang im gleichem Winkelabstand von 72° zwischen dem Außen- und dem Zwischenring vier weitere - seitlich positionierte - äußere Stützstreben (5.2,5.3; 5.4,5.5).

## Beschreibung

Die Erfindung betrifft ein Zwischengehäuse für ein Gasturbinentriebwerk, das einen Außenring, einen Innenring und einen Zwischenring umfasst, die durch äußere und innere, zueinander fluchtend angeordnete Stützstreben gegeneinander abgestützt sind, und dem ein Befestigungsbügel zur Aufhängung des Triebwerks an der rechten oder linken Seite eines Flugzeugrumpfes zugeordnet ist.

Ein bekanntes Gasturbinentriebwerk weist ein Zwischengehäuse (oder Frontgehäuse) auf, das aus einem Außenring, einem Innenring und einem Zwischenring besteht, die zur gegenseitigen Abstützung und Versteifung durch zwischen dem Innenring und dem Zwischenring angeordnete innere Stützstreben (oder Kernstromkanalstreben) sowie zwischen dem Zwischenring und dem Außenring angeordnete äußere Stützstreben (oder Nebenstromkanalstreben) verbunden sind. Beispielsweise sind in einem Winkel von jeweils 36° zehn miteinander fluchtende innere und äußere Stützstreben angeordnet. Neben der Versteifung dienen einzelne Stützstreben auch zur aerodynamischen Verkleidung. Die in den beiden gegenüberliegenden seitlichen Bereichen des Zwischengehäuses vorgesehenen - jeweils drei seitlichen Stützstreben - werden zudem im Zusammenhang mit der sicheren Befestigung eines Befestigungs- oder Montagebügels benötigt, über den das Triebwerk an der linken bzw. der rechten Seite des Flugzeugrumpfes angebracht wird. Die jeweils mittlere (in 3.00 Uhr- bzw. 9.00-Uhr-Stellung) von diesen drei Stützstreben dient zur Aufnahme eines mit dem Montagebügel verbundenen Tragzapfens, während in Höhe der beiden benachbarten Stützstreben am Außenring Gelenkösen zur gelenkigen Verbindung mit dem Befestigungsbügel ausgebildet sind. Die beiden oberen - inneren und äußeren - Stützstreben und eine untere - innere und äußere - Stützstrebe dienen auch zur Durchführung (aerodynamischen Verkleidung) von Versorgungsleitungen und mit der verbleibenden - inneren und äußeren - unteren Stützstrebe wird eine Radialwelle aerodynamisch verkleidet, die mit einem unterhalb des Triebwerks angeordneten Hilfsgerätegetriebe verbunden ist. Die zuvor beschriebene Ausbildung des Zwischengehäuses ist insofern nachteilig, als aufgrund der Anordnung und Nutzung der äußeren Stützstreben an der unteren Seite des Zwischengehäuses nur ein begrenzter Raum zur Unterbringung des Hilfsgerätegetriebes und anderen Einrichtungen zur Verfügung steht. Zudem wird durch die Vielzahl der Stützstreben die Aerodynamik der Strömung im Nebenstromkanal des Triebwerks negativ beeinflusst und das Triebwerksgewicht erhöht.

Der Erfindung liegt daher die Aufgabe zugrunde, das Zwischengehäuse eines Gasturbinentriebwerks so auszubilden, dass die Blockierung der Strömung im Nebenstromkanal und das Gewicht des Triebwerks reduziert werden und andererseits mehr Raum zur Anordnung des Hilfsgerätegetriebes und anderen Zubehörs sowie ein verbesserter Instandhaltungs- und Wartungszugang zum Triebwerk gewährleistet ist.

Erfindungsgemäß wird die Aufgabe mit einem gemäß den Merkmalen des Patenanspruchs 1 ausgebildeten Zwischengehäuse gelöst. Vorteilhafte Weiterbildungen der Erfindung sind Gegenstand der Unteransprüche.

Ausgehend von einem Zwischengehäuse für ein Gasturbinentriebwerk, das einen Außenring, einen Innenring und einen Zwischenring umfasst, die durch äußere und innere, zueinander fluchtend angeordnete Stützstreben gegeneinander abgestützt sind, und dem jeweils an einer einem Flugzeugrumpf zugewandten Seite ein Befestigungsbügel zur Aufhängung des Triebwerks sowie an der Unterseite ein mit einer Radialwelle verbundenes Hilfsgerätegetriebe zugeordnet ist, besteht der Grundgedanke der Erfindung darin, dass jeweils eine die Radialwelle verkleidende innere und äu-βere Stützstrebe in einer 6.00Uhr-Position angeordnet sind und in am Umfang gleichem Winkelabstand zwischen dem Außen- und dem Zwischenring lediglich vier weitere - seitlich positionierte - äußere Stützstreben in einem Winkelabstand von 72° angeordnet sind, so dass an der Unterseite des Triebwerks ein bequemer Montage- und Zugangsbereich von 144° zur Anordnung von Hilfsgeräten und für Wartungs- und Installationsarbeiten zur Verfügung steht. Der dem Zwischenring an der rechten oder linken Seite zugeordnete Befestigungsbügel ist im Bereich der beiden seitlichen - rechten oder linken - Stützstreben an der Außenseite des Außenrings mittels eines Drehgelenks und eines fest am Außenring angebrachten, an den Befestigungsbügel angeformten Tragzapfens fixiert. Aufgrund der spezifischen Anordnung der Stützstreben in Kombination mit der Art der Anbringung des Befestigungsbügels wird - neben dem verbesserten Wartungs- und Installationszugang an der Triebwerksunterseite - eine Gewichtsreduzierung und eine verbesserte Strömung im Nebenstromkanal des Triebwerks erreicht.

In weiterer Ausbildung der Erfindung sind die inneren Stützstreben in einem Winkelabstand von 36° angeordnet. Der Tragzapfen ist mittels Flansch und Bolzen am Außenring befestigt.

In weiterer Ausbildung der Erfindung erfolgt der Ölrücklauf (scavenge routing) von der Rückfläche des Zwischenrings unterhalb der Kernverkleidung durch die Splitterverkleidung oder durch die - die Radialwelle verkleidende - Stützstrebe.

In weiterer Ausbildung der Erfindung erfolgt sowohl die Luftführung als auch die Führung der Geschwindigkeitsgeberkabel von der Rückfläche des Zwischenrings unterhalb der Kernverkleidung über die Splitterverkleidung, und der Beschleunigungsmesser ist nahe der äußeren Stützstreben im Bereich des Drehgelenks befestigt.

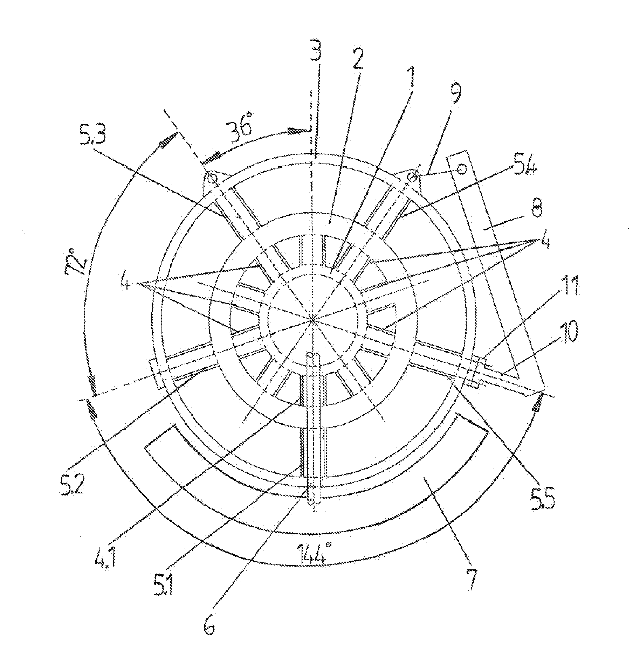

Ein Ausführungsbeispiel der Erfindung wird anhand der Zeichnung, deren einzige Figur eine schematische Schnittansicht eines Zwischengehäuses, dem ein Befestigungsbügel zur Triebwerksaufhängung und ein Hilfsgerätegetriebe zugeordnet sind, zeigt, näher erläutert.

Das Zwischengehäuse umfasst einen Innenring 1, einen Zwischenring 2 und einen Außenring 3, die durch innere Stützstreben 4 und äußere Stützstreben 5 gegeneinander abgestützt sind. Zwischen dem Innenring 1 und dem Zwischenring 2 sind jeweils im Winkel von 36° insgesamt zehn innere Stützstreben 4 angeordnet, wobei sich in jedem Fall eine innere Stützstrebe 4.1 in der 6.00-Uhr-Stellung befindet. Die äußeren Stützstreben 5 sind zwischen dem Außenring 3 und dem Zwischenring 2 angeordnet, wobei sich eine äußere Stützstrebe 5.1 in der 6.00-Uhr-Stellung und somit in einer Flucht mit der inneren Stützstrebe 4.1 befindet. Die in der 6.00-Uhr-Stellung angeordneten Stützstreben 4.1 und 5.1 sind jeweils als Hohlkörper ausgebildet, die eine Radialwelle 6 aerodynamisch verkleiden. Die Radialwelle 6 ist mit einem an der Unterseite des Triebwerks angebrachten Hilfsgerätegetriebe 7 in Eingriff. Im Winkel von 72°versetzt zueinander und zu den ersten inneren und äußeren Stützstreben 4.1 und 5.1 sind vier weitere äußere Stützstreben 5.2 bis 5.5 angeordnet, die mit den entsprechend angeordneten inneren Stützstreben, das heißt jeder zweiten inneren Stützstrebe 4, in einer Flucht liegen. Durch die Reduzierung und Art der Anordnung der äußeren Stützstreben 5 steht an der Unterseite des Triebwerks in einem Bereich von 144°ein ausreichend großer Raum zur Anbringung des Hilfsgerätegetriebes 7 und weiteren Zubehörs zur Verfügung, so dass im Endeffekt die Länge von Rohrleitungen und Kabelsträngen und letztlich das Gewicht reduziert werden kann und außerdem vom Boden aus ein besserer Zugang für Instandhaltungs- und Wartungsmaßnahmen möglich ist.

Die spezifische Anordnung und Reduzierung der äußeren Stützstreben 5.1 bis 5.5 wird zum einen durch eine veränderte Aufhängung des Triebwerks über den an der rechten bzw. linken Seite des Zwischengehäuses angebrachten Befestigungsbügel 8 erreicht, zu dessen Anbringung nur jeweils zwei Stützstreben benötigt werden. Der Befestigungsbügel 8 ist am Außenring 3 in Höhe der beiden seitlichen Stützstreben, das heißt, der beiden rechten Stützstreben 5.4 und 5.5 oder der beiden linken Stützstreben 5.2 und 5.3, jeweils nur an zwei Positionen gehalten, und zwar an dem einen Ende in Höhe der äußeren Stützstrebe 5.3 bzw. 5.4 durch ein Drehgelenk 9 und an dem anderen Ende in Höhe der äußeren Stützstrebe 5.2 bzw. 5.5 durch einen am Befestigungsbügel 8 angeformten und in Höhe der Stützstrebe 5. 2 bzw. 5.5 fest mit dem Außenring 3 verbundenen Tragzapfen 10. Die Befestigung des Tragzapfens 10 am Zwischengehäuse erfolgt hier über eine Flanschverbindung 11 mit Bolzen.

Der Ölrücklauf (scavenge routing) kann von der Rückfläche des Zwischenrings 2 unterhalb der Kernverkleidung durch die Splitterverkleidung oder auch durch die - die Radialwelle 6 verkleidende - Stützstrebe 5.1 vorgenommen werden, so dass eine zu diesem Zweck üblicherweise vorgesehene äußere Stützstrebe entfallen kann.

Sowohl die Luftführung als auch die Führung der Geschwindigkeitsgeberkabel erfolgt von der Rückfläche des Zwischenrings unterhalb der Kernverkleidung über die Splitterverkleidung. Der Beschleunigungsmesser kann nahe der äußeren Stützstreben 5.3 oder 5.4, d.h. wo das Drehgelenk 9 befestigt ist, angebracht werden.

Neben dem verbesserten Platzangebot an der Unterseite des Triebwerks ist die vorgeschlagene Ausbildung des Zwischengehäuses insofern vorteilhaft, als der Luftstrom im Nebenstromkanal aufgrund der verminderten Anzahl von Stützstreben verbessert und gleichzeitig das Triebwerksgewicht verringert wird.

### Bezugszeichenliste

- 1: Innenring
- 2: Zwischenring
- 3: Außenring
- 4: innere Stützstreben
- 4.1: innere Stützstrebe in 6.00Uhr-Position
- 5: äußere Stützstreben
- 5.1: äußere Stützstrebe in 6.00Uhr Position
- 5.2, 5.3: äußere Stützstreben (linksseitig)
- 5.4, 5.5: äußere Stützstreben (rechtsseitig)
- 6: Radialwelle
- 7: Hilfsgerätegetriebe
- 8: Befestigungsbügel
- 9: Drehgelenk
- 10: Tragzapfen
- 11: Flanschverbindung

## Patentansprüche

1. Zwischengehäuse für ein Gasturbinentriebwerk, das einen Außenring (3), einen Innenring (1) und einen Zwischenring (2) umfasst, die durch äußere und innere, zueinander fluchtend angeordnete Stützstreben (4, 5) gegeneinander abgestützt sind, und dem jeweils an einer einem Flugzeugrumpf zugewandten Seite ein Befestigungsbügel (8) zur Aufhängung des Triebwerks sowie an der Unterseite ein mit einer Radialwelle (6) verbundenes Hilfsgerätegetriebe (7) zugeordnet ist, **dadurch gekennzeichnet, dass** jeweils eine die Radialwelle (6) verkleidende innere und äußere Stützstrebe (4.1, 5.1) in einer 6.00Uhr-Position angeordnet sind und in am Umfang gleichem Winkelabstand zwischen dem Außen- und dem Zwischenring (3, 2) vier weitere - seitlich angeordnete - äußere Stützstreben (5.2., 5.3; 5.4, 5.5) angeordnet sind, und dass der jeweilige Befestigungsbügel (8) im Bereich der beiden seitlichen Stützstreben (5.2, 5.3 bzw. 5.4, 5.5) an der Außenseite des Außenrings (3) mittels eines Drehgelenks (9) und eines fest am Au-βenring (3) angebrachten, an den Befestigungsbügel (8) angeformten Tragzapfens (10) fixiert ist.

2. Zwischengehäuse nach Anspruch 1, **dadurch gekennzeichnet, dass** die inneren Stützstreben (4) in einem Winkelabstand von 36° und die äußeren Stützstreben (5) in einem Winkelabstand von 72° angeordnet sind, wobei der am Boden des Zwischenrings (2) zur Verfügung stehende Raum zur Anbringung des Hilfsgerätegetriebes (7) und anderer Hilfsmittel 144° umfasst.

3. Zwischengehäuse nach Anspruch 1, **dadurch gekennzeichnet, dass** der Tragzapfen (10) mittels einer Flanschverbindung (11) am Außenring (3) befestigt ist.

4. Zwischengehäuse nach Anspruch 1, **dadurch gekennzeichnet, dass** der Ölrücklauf (scavenge routing) von der Rückfläche des Zwischenrings (2) unterhalb der Kernverkleidung durch die Splitterverkleidung oder durch die - die Radialwelle (6) verkleidende - Stützstrebe (5.1) erfolgt.

5. Zwischengehäuse nach Anspruch 1, **dadurch gekennzeichnet, dass** sowohl die Luftführung als auch die Führung der Geschwindigkeitsgeberkabel von der Rückfläche des Zwischenrings unterhalb der Kernverkleidung über die Splitterverkleidung erfolgt, und der Beschleunigungsmesser nahe der äußeren Stützstreben (5.3 oder 5.4) im Bereich des Drehgelenks (9) befestigt ist.
